(19) Europäisches Patentamt
European Patent Office
Office européen des brevets

(11) **EP 2 409 181 B1**

(12) **FASCICULE DE BREVET EUROPEEN**

(45) Date de publication et mention de la délivrance du brevet:
**09.09.2015 Bulletin 2015/37**

(21) Numéro de dépôt: **10715939.4**

(22) Date de dépôt: **15.03.2010**

(51) Int Cl.:
***G02B 1/10*** *(2015.01)*   ***G02C 7/08*** *(2006.01)*
***B24B 9/14*** *(2006.01)*

(86) Numéro de dépôt international:
**PCT/FR2010/050456**

(87) Numéro de publication internationale:
**WO 2010/106275 (23.09.2010 Gazette 2010/38)**

(54) **PROCEDE DE DECOUPE D'UNE PASTILLE A APPLIQUER SUR UN SUBSTRAT COURBE**

VERFAHREN ZUM SCHNEIDEN EINES PFLASTERS ZUR APPLIKATION AUF EINEM GEKRÜMMTEN SUBSTRAT

METHOD FOR CUTTING A PATCH TO BE APPLIED ONTO A CURVED SUBSTRATE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **17.03.2009 FR 0951662**

(43) Date de publication de la demande:
**25.01.2012 Bulletin 2012/04**

(73) Titulaire: **Essilor International (Compagnie Générale d'Optique)**
**94220 Charenton-le-Pont (FR)**

(72) Inventeurs:
• **ALLIONE, Pascal**
**F-94220 Charenton-le-Pont (FR)**
• **BEGON, Cédric**
**F-94220 Charenton-le-Pont (FR)**
• **LAVILLONNIERE, Nicolas**
**F-94220 Charenton-le-Pont (FR)**
• **LADOUS, Agnès**
**F-94220 Charenton-le-Pont (FR)**

(74) Mandataire: **Cabinet Plasseraud**
**52, rue de la Victoire**
**75440 Paris Cedex 09 (FR)**

(56) Documents cités:
**FR-A- 2 907 922      US-A- 5 764 333**
**US-A- 5 923 561      US-A- 6 113 233**
**US-A1- 2003 048 406**

## Description

La présente invention concerne un procédé de découpe d'une pastille («patch» en anglais) qui est destinée à être appliquée sur un substrat courbe.

Elle est particulièrement utile dans le domaine ophtalmique, pour appliquer sur un verre de lunettes une pastille qui est découpée dans un film plan.

De nombreux procédés industriels comprennent l'application d'un film sur une face courbe d'un substrat. Par face courbe on comprend, d'une façon générale, une face qui est continue, sans trou ni marche dans une partie centrale de cette face qui est utile optiquement, et qui présente une courbure dans au moins une direction. En particulier, la face du substrat peut présenter, en chaque point de celle-ci, deux courbures qui sont égales ou différentes selon deux directions tangentes à cette face au point considéré, et ces deux courbures peuvent varier ou non d'un point à un autre. Ainsi, la face courbe peut correspondre à une surface complexe, couramment dite pseudo-sphérique dans le jargon de l'Homme du métier. En particulier, la surface du substrat peut être non-développable.

Pour des raisons économiques, le film qui est destiné à être appliqué sur le substrat est initialement plan, tout en pouvant être flexible. Autrement dit, il est souple mais sa forme reste développable en permanence, c'est-à-dire que le film peut être ramené dans une configuration plane par déroulement, sans que des étirements localisés soient produits. Un tel film peut être notamment fabriqué en configuration plane ou en rouleau.

Usuellement, une portion du film est d'abord découpée, qui est plus grande que la face du substrat à recouvrir. Elle est ensuite appliquée et fixée sur le substrat, et une partie excédentaire de la portion de film qui déborde au delà d'un bord périphérique de la face du substrat est retirée. Or, d'une part, cette partie excédentaire est perdue, par rapport à un taux d'utilisation du film entier qui est pourvu initialement. D'autre part, la partie du film qui déborde autour de la face du substrat peut être difficile à retirer. Par exemple, la partie de la portion de film qui est excédentaire par rapport au substrat peut être coupée avec une lame en suivant le bord de la face du substrat. Mais un tel mode opératoire est long et difficile à automatiser. Alternativement, la partie excédentaire de la portion de film peut être abrasée au moyen d'une meule contre laquelle le bord du substrat est pressé. Dans tous les cas, le retrait de la partie excédentaire de la portion de film constitue une étape spécifique dans la fabrication du produit final, pendant laquelle le substrat et la portion de film doivent être maintenus fermement sur un support d'outil. Or ce maintien peut produire des rayures, des écrasements et des déchirures du film, qui sont incompatibles avec des exigences de qualité pour le produit final. De telles exigences de qualité sont particulièrement contraignantes lorsqu'il s'agit d'un produit optique, et notamment d'un produit ophtalmique tel qu'un verre de lunettes. Par ailleurs, la séparation de la partie de film excédentaire, alors qu'elle est encore attenante au substrat, peut aussi produire des arrachements ou des décollements du film par rapport au substrat.

Le document FR 2 907 922 divulgue de découper des portions de film fonctionnalisées dans une feuille plane du film.

Un but de la présente invention consiste alors à proposer un procédé amélioré pour appliquer un film sur un substrat courbe, qui ne présente pas les inconvénients cités précédemment.

En particulier, l'invention a pour but de fournir un substrat courbe qui est recouvert d'une portion de film, avec une bonne coïncidence entre les bords respectifs de la portion de film et du substrat.

Un autre but de l'invention réside dans l'obtention d'un produit final, qui comprend le substrat recouvert par la portion de film et qui présente un niveau de qualité suffisant.

Pour cela, l'invention propose un procédé de découpe d'une pastille dans un film plan, en vue d'appliquer cette pastille sur une face courbe d'un substrat qui est limitée par un bord périphérique, le procédé comprenant les étapes initiales suivantes :

/1/ obtenir des coordonnées tridimensionnelles d'un ensemble de points qui forme un maillage de la face du substrat ; et

/2/ déterminer un point de référence dans la face du substrat, un axe de référence qui traverse la face du substrat à ce point de référence, un plan de référence qui est tangent à la face du substrat au même point de référence, et une série de points d'échantillonnage qui sont répartis le long du bord périphérique de cette face.

Le procédé comprend en outre les étapes /3/ à /5/ suivantes, qui sont effectuées pour chaque point d'échantillonnage du bord périphérique de la face du substrat :

/3/ déterminer un plan de développement qui contient l'axe de référence et qui passe par le point d'échantillonnage du bord périphérique ;

/4/ à partir des coordonnées des points du maillage qui sont obtenues à l'étape /1/, calculer une longueur curviligne entre le point de référence et le point d'échantillonnage considéré du bord périphérique, en suivant un segment courbe d'intersection de la face du substrat avec le plan de développement ; et

/5/ reporter cette longueur curviligne à partir du point de référence, le long d'une ligne rectiligne d'intersection entre le plan de développement et le plan de référence tangent à la face du substrat au point de référence, de façon à former un segment rectiligne qui est issu du point de référence et qui possède la longueur calculée à l'étape /4/,

puis les étapes suivantes :

/6/ relier des extrémités des segments rectilignes qui sont opposées au point de référence, par un contour d'interpolation contenu dans le plan de référence ; et

/7/ reporter le contour d'interpolation sur le film et découper la pastille en fonction de ce contour.

Ainsi, dans un procédé selon l'invention, la pastille est d'abord découpée directement aux dimensions de la face courbe du substrat, avant d'être appliquée sur cette dernière. Pour cela, le procédé comprend des étapes préalables qui permettent de déterminer la position finale du bord de la face du substrat dans le film. Cette position du bord est déterminée en calculant des longueurs curvilignes de rayons de la face courbe du substrat, puis en reportant ces longueurs sur le film plan. Un contour est ainsi tracé sur le film, qui vient en coïncidence avec le bord de la face du substrat lorsque la pastille est finalement appliquée sur cette face.

Un procédé selon l'invention ne comporte donc qu'une seule étape de découpe du film, permettant de réduire la durée de fabrication du produit final. En particulier, aucune rectification du bord de découpe de la pastille n'est nécessaire, même après que la pastille a été appliquée sur le substrat.

En outre, la pastille peut être découpée à l'étape /7/ dans le film selon ses dimensions dans le produit final. De cette façon, d'éventuelles pertes de matière première du film en tant que chutes de découpe sont diminuées.

Cette découpe est réalisée alors que la pastille est séparée du substrat. L'opération de découpe peut donc être réalisée simplement, notamment pendant que le film est encore dans une configuration plane. En particulier, un procédé de découpe peut être facilement mis en oeuvre, qui préserve la qualité du film et produit un bord de découpe dépourvu de défaut.

Enfin, toutes les étapes d'un procédé selon l'invention peuvent être réalisées numériquement, en utilisant un programme informatique adapté. Leur mise en oeuvre peut donc être rapide et peu onéreuse.

Un tel procédé est particulièrement adapté lorsque la face du substrat est une surface continue non-développable.

Selon un perfectionnement de l'invention, le procédé peut comprendre en outre l'étape supplémentaire suivante, qui est effectuée après l'étape /7/ :

/8/ appliquer la pastille sur la face courbe du substrat en la déformant conformément à cette dernière, de sorte que chaque segment rectiligne qui est reporté sur le film soit dirigé angulairement vers le point d'échantillonnage correspondant sur le bord de la face du substrat.

Lors de cette étape supplémentaire, la pastille est appliquée sur la face du substrat à partir d'un point de contact initial sans glisser par rapport au substrat en ce point. Pour cela, le point de contact initial est distant du point de référence qui est reporté sur le film de moins d'un quart d'un diamètre du bord périphérique.

Eventuellement, le bord périphérique de la face courbe du substrat peut comprendre un bord périphérique externe de cette face et au moins un trou qui est situé dans celle-ci à l'intérieur du bord périphérique externe. L'invention permet alors de découper la pastille selon le bord externe et selon le bord du trou de sorte que ces deux bords de la pastille coïncident simultanément avec précision avec un bord de trou et un bord périphérique externe du substrat.

Un procédé selon l'invention est particulièrement adapté lorsque le substrat comprend un verre de lunettes ophtalmiques, et que le bord périphérique de la face du substrat est déterminé en fonction d'un logement de monture de lunettes, dans lequel le verre est destiné à être assemblé. Dans ce cas, la pastille est appliquée de préférence sur la face du verre de lunettes qui forme le substrat après que ce verre a été détouré. De cette façon, la pastille et le verre de lunettes sont d'abord amenés séparément à leurs dimensions finales, puis sont assemblés l'un avec l'autre sans qu'aucune modification ultérieure du bord périphérique du verre ou du bord de la pastille ne soit nécessaire.

D'autres particularités et avantages de la présente invention apparaîtront dans la description ci-après d'exemples de mise en oeuvre non limitatifs, en référence aux dessins annexés, dans lesquels :

- les figures 1 a à 1 c sont des vues en sections transversales qui illustrent respectivement trois modes d'assemblage d'un verre de lunettes ophtalmiques dans une monture ;

- la figure 2 représente des éléments géométriques utilisés dans un procédé selon l'invention ;

- la figure 3 illustre une variante de mise en oeuvre d'un procédé selon l'invention ; et

- la figure 4 illustre une application d'un procédé selon l'invention.

L'invention est maintenant décrite dans le cadre d'une application ophtalmique, pour la réalisation d'un verre de lunettes.

Le substrat, qui est référencé 20 sur les figures, peut être lui-même un verre de lunettes, dit verre de base. Il possède une face antérieure qui est convexe et une face postérieure qui est concave. De préférence, le verre de base 20 a déjà été détouré aux dimensions d'un logement de monture de lunettes ophtalmiques, dans lequel le verre final est destiné à être assemblé. Un tel détourage peut avoir été réalisé de façon usuelle, en utilisant par exemple un outil de meulage ou de fraisage connu de l'Homme du métier.

A l'issue du détourage, le verre de base 20 possède un bord périphérique B qui limite ses deux faces conformément à la forme du logement de la monture. En outre, le bord du verre possède un profil en section qui est adapté en fonction du mode d'assemblage du verre dans la monture.

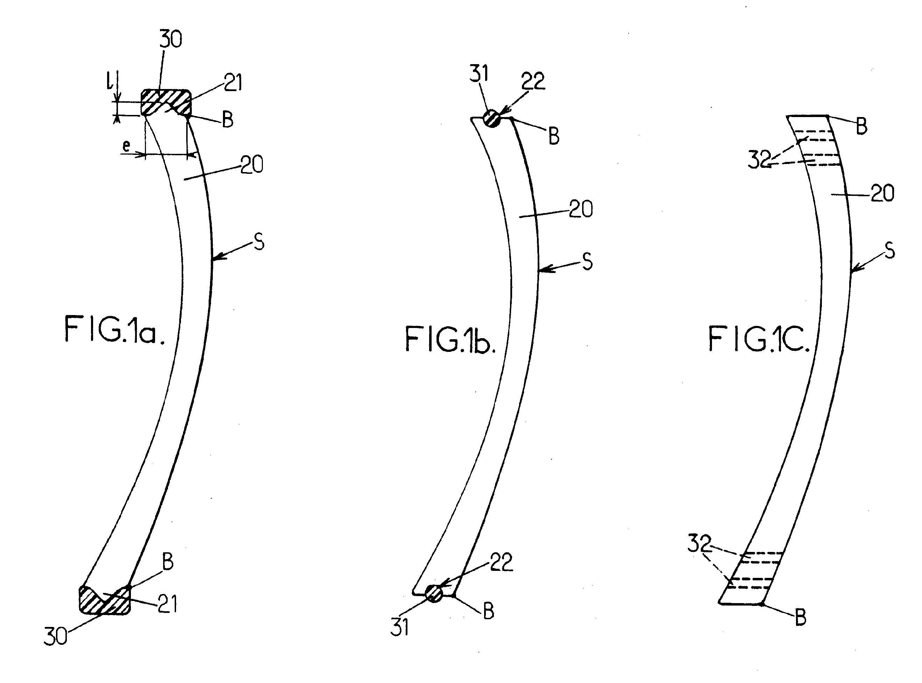

Selon un premier mode d'assemblage illustré par la figure 1a, ce profil en section peut comporter une nervure saillante 21, qui est destinée à pénétrer dans une gorge de la monture 30, qui entoure le logement du verre. Dans ce cas, chacune des faces antérieure et postérieure du verre 20 présente elle-même un bord périphérique B qui est en retrait par rapport au sommet de la nervure 21. Un tel retrait, qui est couramment appelé biseau («bevel» en anglais), peut être constant ou variable autour du verre. La figure 1a montre la hauteur du biseau («bevel height») d'assemblage, notée b. Eventuellement, cette hauteur de biseau b peut être réduite d'une hauteur de talonnage («heeling height») qui est déterminée à partir de l'épaisseur e du verre 20.

Un second mode d'assemblage, illustré par la figure 1b, est adapté lorsque le logement du verre dans la monture 30 est ouvert sur une partie du bord périphérique du verre. Le verre 20 peut alors être retenu dans la monture par un fil 31, par exemple un fil de nylon, qui enserre le verre dans la partie ouverte du logement de la monture. Pour cela, le bord du verre présente une gorge 22 qui est adaptée pour recevoir le fil 31.

Un autre mode d'assemblage encore, qui est illustré par la figure 1c, concerne des montures dites percées («frameless» en anglais). Dans ce cas, la monture ne présente pas de portion rigide qui suit le bord périphérique de chaque verre, mais elle est composée de segments de monture qui sont séparés et vissés dans le verre, à proximité du bord B de celui-ci. Le bord B du verre 20 est alors dégagé, et peut présenter un profil quelconque, le plus souvent un profil droit. Au moins deux trous 32 sont alors prévus dans le verre 20, pour recevoir chacun une vis, avec éventuellement une chemise de vis, ou une broche de blocage (non représentées). Dans des mises en oeuvre différentes de ce mode d'assemblage, chaque trou 32 peut être traversant entre les faces antérieure et postérieure du verre, ou bien être un trou borgne qui est ouvert sur une seule de ces faces. On utilise alors couramment un gabarit, qui est le plus souvent plan, et qui détermine la forme du bord périphérique du verre à la façon d'un logement de monture, ainsi que la position des trous par rapport à ce bord. Dans le cadre de la présente invention, on comprend désormais que le bord périphérique du verre qui limite la face de celui-ci qui est utilisée pour l'invention peut comprendre, en plus du bord périphérique externe du verre qui est désigné par B dans les figures, le ou les bord(s) de un ou plusieurs trou(s) qui est (sont) situé(s) à l'intérieur de ce bord périphérique externe et qui est (sont) destiné(s) à l'assemblage à vis.

Préalablement au détourage du verre 20, la forme du logement du verre dans la monture 30 est déterminée en utilisant un outil de relevé de contour. Un tel outil est supposé connu en soi, de sorte que sa description n'est pas reprise en détail ici. Il peut être adapté pour effectuer un relevé bidimensionnel ou tridimensionnel de la limite du logement du verre dans la monture, ou de la limite d'un gabarit du verre. Dans le cas bidimensionnel, une projection de cette limite dans un plan fixe est obtenue, qui est équivalente à l'annulation d'une coordonnée sagittale de chaque point de la limite du logement.

Une portion 1 d'un film fonctionnel 10 est destinée à être appliquée sur la face antérieure ou la face postérieure du verre de base 20. Le film 10, dans lequel la pastille 1 est découpée, peut être destiné à conférer au verre final des fonctions supplémentaires par rapport au verre de base 20. Par exemple, le film 10 peut être sélectionné parmi les films suivants :

- un film organique qui porte au moins un revêtement fonctionnel sur une face de ce film, par exemple un revêtement antireflet ;

- un film qui est pourvu d'une structure de Fresnel, de sorte que ce film possède lui-même une puissance optique ; ou

- une structure multicouche qui comprend un ensemble de cellules juxtaposées parallèlement à une face de cette structure.

L'utilisation d'une structure multicouche cellulaire est particulièrement favorable pour obtenir des propriétés optiques particulières, grâce à des substances optiques qui sont sélectionnées de façon appropriée et placées dans les cellules. En particulier, elle permet de conférer à la demande des propriétés spécifiques au verre final, avec un prix de revient et une durée de fourniture qui sont réduits.

Le film 10 est initialement plan, ou présente une forme développable, notamment lorsqu'il est fabriqué sur un support de production qui est plan ou lorsqu'il est fourni en rouleau.

La forme de la face du verre de base 20 sur laquelle la pastille 1 est destinée à être appliquée peut être quelconque. Par exemple, elle peut être sphérique, torique ou complexe. Dans ce dernier cas, le verre de base 20 peut être du type verre progressif, avec une courbure de sa face qui augmente entre deux points correspondant respectivement à une direction de vision de loin et à une direction de vision de près. A titre d'illustration seulement, on supposera dans la suite que la pastille 1 est destinée à être appliquée sur la face antérieure convexe du verre de base 20. Cette face est notée S sur les figures.

La face S du verre de base 20 est d'abord caractérisée par les coordonnées tridimensionnelles d'un ensemble de points qui appartiennent à cette face. Ces points forment un maillage de la face S, qui peut être régulier ou irrégulier, et dont le pas peut être aisément sélectionné par l'Homme du métier en fonction de la précision qui est requise pour la superposition du bord de la pastille 1 avec celui du verre de base 20 dans le produit final. De façon connue, les points d'un maillage forment un échantillonnage de la surface à laquelle ils appartiennent, et cette surface peut être reconstituée ultérieurement par interpolation entre ces points, avec une précision qui dépend de la densité du maillage. Les coordonnées des points du maillage de la face S peuvent être obtenues de plusieurs façons. Selon une première façon qui est particulièrement adaptée lorsque la face S possède une forme simple, notamment lorsqu'elle est sphérique ou torique, les coordonnées des points du maillage peuvent être calculées à partir de deux valeurs de courbure de cette face, le long de deux directions perpendiculaires. Selon une deuxième façon, les coordonnées des points du maillage de la face S peuvent être lues dans un fichier numérique qui est stocké sur un support d'enregistrement. Par exemple, ce fichier peut être sélectionné dans une bibliothèque à partir de données d'une prescription ophtalmique correspondant au verre. Enfin, selon une troisième façon qui est adaptée lorsque la face S n'est pas connue initialement, les coordonnées des points du maillage de la face S peuvent être déterminées à partir d'une ou plusieurs mesure(s) optique(s) ou géométrique(s) qui est (sont) effectuée(s) sur le verre de base.

Les deux dernières façons d'obtenir un maillage de la face S qui viennent d'être citées sont adaptées, en particulier, lorsque le verre de base est un verre progressif. Un tel verre progressif est usuellement caractérisé par deux valeurs de courbure en un premier point de référence qui correspond à la direction de vision de loin à travers le verre, et par une valeur d'addition qui caractérise la variation d'une de ces courbures entre un second point de référence correspondant à une direction de vision de près et le premier point de référence pour la vision de loin. Les inventeurs ont alors remarqué que, pour des valeurs de courbure au point de référence pour la vision de loin et une valeur d'addition qui sont fixées, le design exact d'une face progressive modifie peu la coïncidence finale entre les bords respectifs de la pastille 1 et du verre de base 20. En conséquence, des coordonnées de points de maillage qui sont obtenues pour un verre progressif connu peuvent être reprises pour un autre verre progressif, à condition que les deux verres aient des valeurs identiques pour leurs courbures au point de référence pour la vision de loin et des valeurs d'addition identiques.

On détermine aussi un point de référence O dans la face S, un axe de référence $\Delta_0$ qui traverse la face S au point O, ainsi qu'un plan de référence $\Pi_0$ qui est tangent à la face S au point O. Le point O, l'axe $\Delta_0$ et le plan $\Pi_0$ sont fixes. Le point O et l'axe $\Delta_0$ peuvent être sélectionnés d'une façon qui sera décrite plus loin, en relation avec l'application de la pastille 1 sur le verre de base 20. En outre, l'axe $\Delta_0$ peut aussi coïncider avantageusement avec l'axe de rotation de l'outil qui est utilisé pour relever la forme du logement du verre dans la monture, ou bien pour relever la forme du gabarit du verre final dans le cas d'une monture percée. L'axe de référence $\Delta_0$ n'est pas nécessairement perpendiculaire au plan de référence $\Pi_0$.

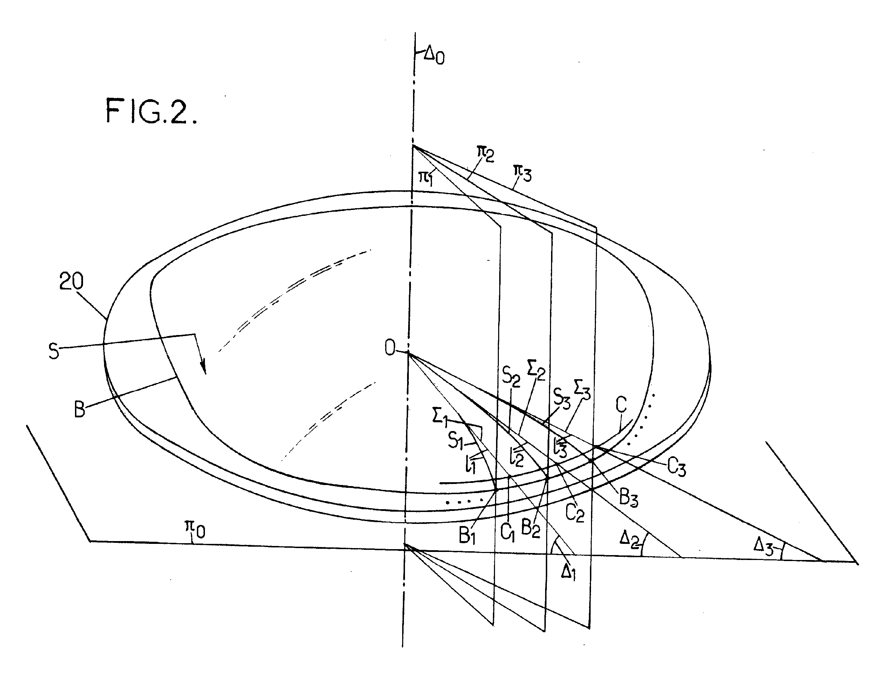

Enfin, on détermine une série de points d'échantillonnage qui sont répartis le long du bord périphérique de la face S. Sur la figure 2, B désigne encore le bord périphérique de la face S du verre de base 20, et $B_1$, $B_2$, $B_3$,... désignent les points d'échantillonnage du bord B. De préférence, la série des points d'échantillonnage du bord B comprend au moins 300 points, voire au moins 700 points, qui peuvent être équidistants angulairement le long du bord B par rapport au point de référence O. Les points $B_1$, $B_2$, $B_3$,... d'échantillonnage du bord B n'ont a priori aucune relation avec les points du maillage de la face S, bien qu'ils appartiennent tous à cette face du verre de base 20. Lorsque la face S du verre de base 20 comporte un ou plusieurs trous, des points d'échantillonnage additionnels sont déterminés en plus sur le bord de chaque trou, et les étapes du procédé qui sont décrites dans la suite pour le bord périphérique externe du verre sont aussi appliquées au bord de chaque trou de la face S, d'une façon qui est identique.

On considère alors un plan de développement distinct pour chaque point d'échantillonnage du bord B, qui contient l'axe de référence $\Delta_0$ et passe par ce point d'échantillonnage. Comme illustré sur la figure 2, le plan de développement $\Pi_1$ passe par le point $B_1$, le plan de développement $\Pi_2$ passe par le point $B_2$, etc. L'intersection du plan de développement $\Pi_1$ avec la face S est alors un segment courbe qui est noté $S_1$. On calcule alors la longueur du segment $S_1$, entre le point de référence O et le point d'échantillonnage $B_1$. Cette longueur est notée $L_1$ et est obtenue par l'intégrale curviligne suivante :

$$l_1 = \int_O^{B_1} ds = \int_O^{B_1} \sqrt{(dx^2 + dy^2 + dz^2)}$$

où s désigne une unité de longueur curviligne le long du segment courbe $S_1$, et x, y, z sont les coordonnées cartésiennes des points du maillage de la face S.

L'intersection entre le plan de développement $\Pi_1$ et le plan de référence $\Pi_0$ est une droite, ou ligne rectiligne, qui est notée $\Delta_1$. La longueur $l_1$ est alors reportée le long de la droite $\Delta_1$, à partir du point O et dans le même sens radial que celui du point $B_1$. Un segment rectiligne $\Sigma_1$ est ainsi obtenu, de longueur $l_1$, qui relie le point référence O à un point d'extrémité noté $C_1$.

Les mêmes opérations sont répétées pour chacun des autres points $B_2$, $B_3$,.... De la série d'échantillonnage du bord B de la face S. Les points $C_1$, $C_2$, $C_3$,... correspondent respectivement aux points $B_1$, $B_2$, $B_3$,... lorsque la face S du verre de base 20 est déroulée le long de la droite $\Delta_1$, $\Delta_2$, $\Delta_3$,... correspondante. Autrement dit, les points $C_1$, $C_2$, $C_3$,... constituent les limites d'un étalement de la face S dans le plan de référence $\Pi_0$, en conservant les distances radiales $I_1$, $I_2$, $I_3$,... à partir du point O ainsi que les angles de répartition autour de ce point. Les segments rectilignes $\Sigma_2$, $\Sigma_3$,... correspondent à $\Sigma_1$ respectivement pour les points $B_2$, $B_3$,...

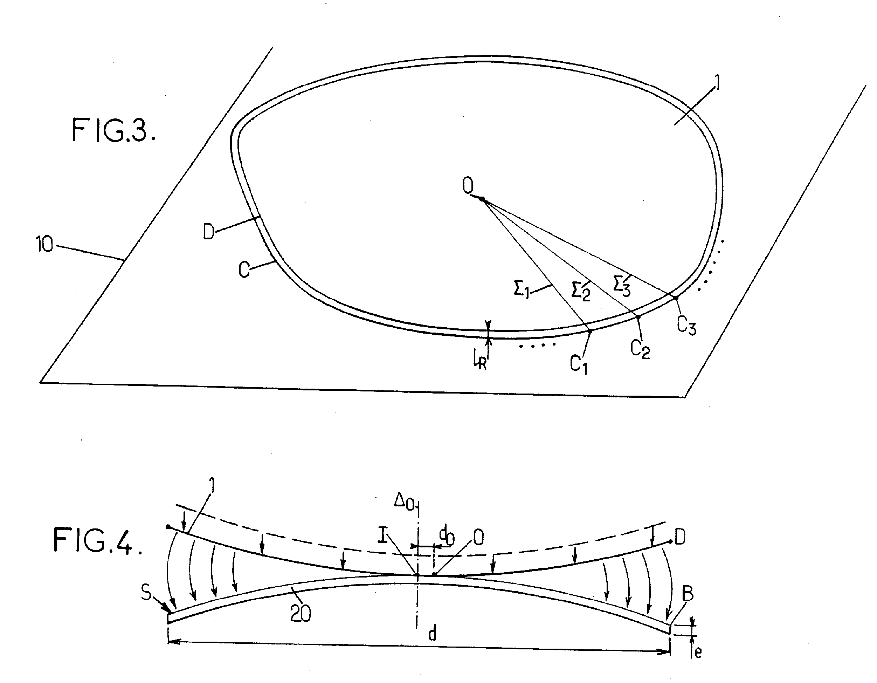

On relie alors les points $C_1$, $C_2$, $C_3$,... dans l'ordre en tournant autour du point O, en interpolant entre deux points successifs. Le contour qui est ainsi obtenu, et qui est noté C sur les figures 2 et 3, est appelé contour d'interpolation. Ce contour C est ensuite reporté sur le film 10 et la pastille 1 est découpée, par exemple en utilisant un procédé de découpe par faisceau laser.

Selon une première possibilité, le trait de découpe de la pastille 1 est superposé au contour C. Un tel mode opératoire est adapté lorsque le verre est retenu par un fil dans le logement de la monture ou qu'il est destiné à être assemblé dans une monture percée, notamment, et que la pastille 1 doit recouvrir le verre de base 20 jusqu'au bord B. Grâce à l'invention, la pastille 1 qui est ainsi déterminée et découpée possède un bord qui coïncide précisément avec le bord B de la face S du verre de base 20, après que la pastille 1 a été appliquée sur cette face en adoptant la forme courbe de celle-ci.

Selon une seconde possibilité qui est illustrée par la figure 3, le trait de découpe de la pastille 1 est décalé à l'intérieur du contour C dans le plan du film 10. Le trait de découpe est noté D, et la longueur de retrait du trait D à l'intérieur du contour d'interpolation C est notée $I_R$. Pour cela, chaque segment rectiligne $\Sigma_1$, $\Sigma_2$, $\Sigma_3$,... qui est reporté sur le film 10 est diminué de la longueur de retrait $I_R$, à l'extrémité de ce segment qui est opposée au point O. En fonction de mises en oeuvre différentes du procédé qui vient d'être décrit, la longueur de retrait $I_R$ peut être égale à :

- la hauteur de biseau b qui est déterminée par le mode d'assemblage du verre dans la monture, et qui est éventuellement diminuée elle-même de la hauteur de talonnage, ou

- une épaisseur d'un cordon («strip») qui est destiné à être rapporté autour de la pastille 1, le long du bord de découpe D, par exemple pour refermer des cellules du film 10 qui ont été ouvertes lors de la découpe de la pastille 1, ou

- une correction qui correspond à la déformation subie par la pastille 1 lorsqu'elle est appliquée sur la face S du verre de base 20, ou

- une somme d'au moins deux des hauteur/épaisseur/correction précédentes.

La longueur de retrait $I_R$ assure que la pastille 1, éventuellement pourvue d'un cordon périphérique, ne déborde pas au-delà du bord B de la face S du verre de base 20, même lorsque ce dernier comporte un biseau pour l'assemblage dans la monture de lunettes.

La figure 4 illustre l'application de la pastille 1 sur le verre de base 20. La pastille 1 est appliquée sur la face S de préférence à partir d'un point de contact initial qui est noté I. La surface de contact entre la pastille 1 et la face S est alors augmentée progressivement, avec une limite de contact qui entoure le point I et se déplace radialement en direction du bord B. De cette façon, aucune bulle d'air n'est retenue entre la pastille 1 et le verre de base 20, et les contraintes qui sont subies par la pastille 1 peuvent être réduites. Bien entendu, la pastille 1 est appliquée sur la face S de sorte que chaque segment $\Sigma_1$, $\Sigma_2$, $\Sigma_3$,... soit dirigé angulairement vers le point $B_1$, $B_2$, $B_3$,... correspondant. L'écart entre les bords respectifs de la pastille 1 et de la face S du verre de base 20 peut alors être inférieur à 150 $\mu$m (micromètre), de sorte qu'il n'est pas visible et n'intervient pas dans l'appréciation esthétique du verre final.

Des précautions peuvent avantageusement être prises pour réduire le risque que la pastille 1 glisse par rapport au verre de base 20, notamment à l'endroit du point de contact initial I, lors de l'application de la pastille contre la face S. Pour cela, le point de référence O est de préférence déterminé au début du procédé de l'invention pour être situé à proximité du point de contact initial I. En particulier, le point de contact initial I et le point de référence O qui est reporté sur le film 10 peuvent être distants l'un de l'autre de moins d'un quart du diamètre d du plus petit cercle entourant l'ensemble du bord périphérique B, voire de moins d'un dixième de ce diamètre. Cette distance entre les points I et O est notée $d_0$ sur la figure 4. L'axe de référence $\Delta_0$ est de préférence parallèle à la direction d'approche et d'application de la pastille 1 contre la face S.

Il est entendu que l'invention peut être reproduite en modifiant des aspects particuliers des mises en oeuvre qui viennent d'être décrites en détail, tout en conservant certains au moins des avantages de l'invention. Notamment, certaines étapes géométriques peuvent être changées en restant équivalentes dans leur principe. Par ailleurs, l'invention peut aussi être utilisée pour appliquer une pastille sur une face d'un substrat qui est concave.

## Revendications

**1.** Procédé de découpe d'une pastille (1) dans un film plan (10), ladite pastille étant destinée à être appliquée sur une face courbe (S) d'un substrat (20) limitée par un bord périphérique (B) de ladite face, le procédé comprenant une étape consistant à reporter un contour sur le film et découper la pastille en fonction dudit contour, **caractérisé en ce qu'**il comprend les étapes suivantes :

/1/ obtenir des coordonnées tridimensionnelles d'un ensemble de points formant un maillage de la face (S) du substrat ;

/2/ déterminer un point de référence (O) dans la face (S) du substrat, un axe de référence ($\Delta_0$) traversant la face (S) du substrat audit point de référence (O), un plan de référence ($\Pi_0$) tangent à la face (S) du substrat audit point de référence (O), et une série de points d'échantillonnage ($B_1$, $B_2$, $B_3$,...) le long du bord périphérique (B) de ladite face du substrat ;

les étapes /3/ à /5/ suivantes étant effectuées pour chaque point d'échantillonnage ($B_1$, $B_2$, $B_3$,...) du bord périphérique :

/3/ déterminer un plan de développement ($\Pi_1$, $\Pi_2$, $\Pi_3$, ...) contenant l'axe de référence ($\Delta_0$) et passant par ledit point d'échantillonnage ($B_1$, $B_2$, $B_3$,...) du bord périphérique ;

/4/ à partir des coordonnées des points du maillage obtenues à l'étape /1/, calculer une longueur curviligne ($I_1$, $I_2$, $I_3$,...) entre le point de référence (O) et ledit point d'échantillonnage ($B_1$, $B_2$, $B_3$,...) du bord périphérique, en suivant un segment courbe ($S_1$, $S_2$, $S_3$,...) d'intersection de la face du substrat (S) avec le plan de développement ($\Pi_1$, $\Pi_2$, $\Pi_3$,...) ;

/5/ reporter la longueur curviligne ($I_1$, $I_2$, $I_3$,...) à partir du point de référence (O), le long d'une ligne rectiligne ($\Delta_1$, $\Delta_2$, $\Delta_3$,...) d'intersection entre le plan de développement ($\Pi_1$, $\Pi_2$, $\Pi_3$,...) et le plan de référence ($\Pi_0$), de façon à former un segment rectiligne ($\Sigma_1$, $\Sigma_2$, $\Sigma_3$,...) issu dudit point de référence et ayant la longueur calculée à l'étape /4/ ;

le procédé comprenant ensuite les étapes suivantes :

/6/ relier des extrémités ($C_1$, $C_2$, $C_3$,...) des segments rectilignes ($\Sigma_1$, $\Sigma_2$, $\Sigma_3$,...) opposées au point de référence (O), par un contour d'interpolation (C) contenu dans le plan de référence ($\Pi_0$) ; et

/7/ reporter le contour d'interpolation (C) sur le film (10) et découper la pastille (1) en fonction dudit contour d'interpolation.

2. Procédé selon la revendication 1, suivant lequel la face (S) du substrat est une surface continue non-développable.

3. Procédé selon la revendication 1 ou 2, comprenant en outre l'étape suivante, effectuée après l'étape /7/ :

/8/ appliquer la pastille (1) sur la face courbe (S) du substrat en déformant ladite pastille conformément à ladite face, de sorte que chaque segment rectiligne ($\Sigma_1$, $\Sigma_2$, $\Sigma_3$,...) reporté sur le film soit dirigé angulairement vers le point d'échantillonnage ($B_1$, $B_2$, $B_3$,...) correspondant sur le bord (B) de la face (S) du substrat,

la pastille (1) étant appliquée sur la face (S) du substrat à partir d'un point de contact initial (I) sans que ladite pastille glisse par rapport au substrat (20) audit point de contact initial, ledit point de contact initial (I) étant distant du point de référence (O) reporté sur le film (10) de moins d'un quart d'un diamètre (d) du plus petit cercle entourant l'ensemble du bord périphérique (B).

4. Procédé selon la revendication 3, suivant lequel le point de contact initial (I) est distant du point de référence (O) reporté sur le film (10) de moins d'un dixième du diamètre (d) du plus petit cercle entourant l'ensemble du bord périphérique (B).

5. Procédé selon l'une quelconque des revendications précédentes, suivant lequel le substrat (20) comprend un verre de lunettes ophtalmiques, et le bord périphérique (B) de la face courbe (S) dudit substrat est déterminé en fonction d'un logement de monture de lunettes, dans lequel ledit verre est destiné à être assemblé.

6. Procédé selon la revendication 5, suivant lequel la pastille (1) est appliquée sur la face (S) du verre de lunettes ophtalmiques formant le substrat (20) après que ledit verre a été détouré conformément au bord périphérique (B).

7. Procédé selon la revendication 5 ou 6, suivant lequel la pastille (1) est découpée à l'étape /7/ suivant un contour de découpe (D) obtenu à partir du contour d'interpolation (C), en diminuant chaque segment rectiligne ($\Sigma_1$, $\Sigma_2$, $\Sigma_3$,...) reporté sur le film (10), à l'extrémité dudit segment rectiligne opposée au point de référence (O) reporté, d'une longueur de retrait ($I_R$) égale à :

- une hauteur de biseau (b) déterminée par un mode d'assemblage du verre dans la monture, ladite hauteur de biseau étant éventuellement diminuée elle-même d'une hauteur de talonnage déterminée à partir d'une épaisseur (e) du verre, ou

- une épaisseur d'un cordon destiné à être rapporté autour de la pastille (1), le long dudit bord de découpe (D), ou

- une correction correspondant à une déformation subie par la pastille (1) lors de l'application de ladite pastille sur la face courbe (S) du verre, ou

- une somme d'au moins deux des hauteur/épaisseur/correction précédentes.

8. Procédé selon l'une quelconque des revendications 5 à 7, suivant lequel la série de points d'échantillonnage ($B_1$, $B_2$, $B_3$,...) déterminée à l'étape /2/, comprend au moins 300 points, de préférence au moins 700 points.

9. Procédé selon l'une quelconque des revendications 5 à 8, suivant lequel les points d'échantillonnage ($B_1$, $B_2$, $B_3$,...) du bord périphérique (B) de la face (S) du substrat sont équidistants angulairement le long dudit bord périphérique par rapport au point de référence (O).

10. Procédé selon l'une quelconque des revendications 5 à 9, suivant lequel la face (S) du verre de lunettes ophtalmiques formant le substrat (20) est sphérique ou torique, et suivant lequel les coordonnées des points du maillage de ladite face sont calculées à l'étape /1/ à partir de deux valeurs de courbure de ladite face le long de deux directions perpendiculaires.

11. Procédé selon l'une quelconque des revendications 5 à 9, suivant lequel les coordonnées des points du maillage de la face (S) du verre obtenues à l'étape /1/ sont lues dans un fichier numérique, ledit fichier étant sélectionné dans une bibliothèque à partir de données d'une prescription ophtalmique correspondant audit verre.

12. Procédé selon l'une quelconque des revendications 5 à 9, suivant lequel les coordonnées des points du maillage de la face (S) du verre obtenues à l'étape /1/ sont déterminées par au moins une mesure optique ou géométrique effectuée sur ledit verre.

13. Procédé selon la revendication 11 ou 12, suivant lequel la face (S) du verre de lunettes ophtalmiques formant le substrat (20) est progressive.

14. Procédé selon l'une quelconque des revendications 5 à 13, suivant lequel le film plan (10) dans lequel est découpée la pastille (1) est sélectionné parmi les films suivants :

  - un film organique portant au moins un revêtement fonctionnel sur une face dudit film, par exemple un revêtement antireflet ;
  - un film pourvu d'une structure de Fresnel de sorte que ledit film possède une puissance optique ; ou
  - une structure multicouche comprenant un ensemble de cellules juxtaposées parallèlement à une face de ladite structure.

15. Procédé selon l'une quelconque des revendications précédentes, dans lequel le bord périphérique de la face courbe (S) du substrat (20) comprend un bord périphérique externe (B) de ladite face et au moins un trou situé dans ladite face à l'intérieur dudit bord périphérique externe.

**Patentansprüche**

1. Verfahren zum Ausschneiden eines Plättchens (1) aus einer flachen Folie (10), wobei das Plättchen dazu bestimmt ist, auf eine gekrümmte Fläche (S) eines Substrats (20) aufgebracht zu werden, die von einem Umfangsrand (B) der Fläche begrenzt ist, wobei das Verfahren einen Schritt umfasst, darin bestehend, eine Kontur auf die Folie aufzutragen und das Plättchen in Abhängigkeit von der Kontur auszuschneiden, **dadurch gekennzeichnet, dass** es die folgenden Schritte umfasst:

  /1/ Erhalt von dreidimensionalen Daten einer Gesamtheit von Punkten, die ein Netz der Fläche (S) des Substrats bilden;
  /2/ Bestimmung eines Referenzpunktes (0) in der Fläche (S) des Substrats, einer Referenzachse ($\Delta_0$), die die Fläche (S) des Substrats am Referenzpunkt (0) quert, eine Referenzebene ($\Pi_0$), die die Fläche (S) des Substrats am Referenzpunkt (0) tangiert, und eine Reihe von Probenahmepunkten ($B_1$, $B_2$, $B_3$, ...) entlang des Umfangsrandes (B) der Fläche des Substrats;

wobei die folgenden Schritte /3/ bis /5/ für jeden Probenahmepunkt ($B_1$, $B_2$, $B_3$, ...) des Umfangsrandes durchgeführt werden:

  /3/ Bestimmung einer Entwicklungsebene ($\Pi_1$, $\Pi_2$, $\Pi_3$,...), die die Referenzachse ($\Delta_0$) enthält und durch den Probenahmepunkt ($B_1$, $B_2$, $B_3$, ...) des Umfangsrandes verläuft;
  /4/ auf Basis der Koordinaten der Punkte des Netzes, die in Schritt /1/ erhalten wurden, Berechnung einer gekrümmten Länge ($I_1$, $I_2$, $I_3$, ...) zwischen dem Referenzpunkt (0) und dem Probenahmepunkt ($B_1$, $B_2$, $B_3$, ...) des Umfangsrandes, wobei ein gekrümmtes Schnittsegment ($S_1$, $S_2$, $S_3$, ...) der Fläche des Substrats (S) mit der Entwicklungsebene ($\Pi_1$, $\Pi_2$, $\Pi_3$, ...) verfolgt wird;
  /5/ Auftragen der gekrümmten Länge ($I_1$, $I_2$, $I_3$, ...) vom Referenzpunkt (0) entlang einer geraden Schnittlinie ($\Delta_1$, $\Delta_2$, $\Delta_3$, ...) zwischen der Entwicklungsebene ($\Pi_1$, $\Pi_2$, $\Pi_3$, ...) und der Referenzebene ($\Pi_0$), um ein gerades Segment ($\Sigma_1$, $\Sigma_2$, $\Sigma_3$, ...) zu bilden, das vom Referenzpunkt ausgeht und die in Schritt /4/ berechnete Länge hat;

wobei das Verfahren sodann die folgenden Schritte umfasst:

/6/ Verbindung der Enden ($C_1$, $C_2$, $C_3$, ...) der geraden Segmente ($\Sigma_1$, $\Sigma_2$, $\Sigma_2$, ...), die dem Referenzpunkt (0) gegenüberliegen durch eine Interpolationskontur (C), die in der Referenzebene ($\Pi_0$) enthalten ist; und
/7/ Auftragen der Interpolationskontur (C) auf die Folie (10) und Ausschneiden des Plättchens (1) in Abhängigkeit von der Interpolationskontur.

2. Verfahren nach Anspruch 1, bei dem die Fläche (S) des Substrats eine nicht entwickelbare durchgehende Fläche ist.

3. Verfahren nach Anspruch 1 oder 2, ferner umfassend den folgenden Schritt, der nach Schritt /7/ ausgeführt wird:

/8/ Aufbringen des Plättchens (1) auf die gekrümmte Fläche (S) des Substrats, wobei das Plättchen gemäß dieser Fläche verformt wird, so dass jedes gerade Segment ($\Sigma_1$, $\Sigma_2$, $\Sigma_2$, ...), das auf die Folie aufgetragen wurde, im Winkel zum entsprechenden Probenahmepunkt ($B_1$, $B_2$, $B_3$, ...) auf dem Rand (B) der Fläche (S) des Substrats gerichtet ist,

wobei das Plättchen (1) auf die Fläche (S) des Substrats von einem Anfangskontaktpunkt (I) aufgetragen wird, ohne dass das Plättchen in Bezug zum Substrat (20) am Anfangskontaktpunkt gleitet, wobei der Anfangskontaktpunkt (I) vom Referenzpunkt (0), der auf die Folie (10) aufgetragen ist, um weniger als ein Viertel eines Durchmessers (d) des kleinsten Kreises, der die Gesamtheit des Umfangsrandes (B) umgibt, entfernt ist.

4. Verfahren nach Anspruch 3, bei dem der Anfangskontaktpunkt (I) von dem auf die Folie (10) aufgetragenen Referenzpunkt (0) um weniger als ein Zehntel des Durchmessers (d) des kleinsten Kreises, der die Gesamtheit des Umfangsrandes (B) umgibt, entfernt ist.

5. Verfahren nach einem der vorhergehenden Ansprüche, bei dem das Substrat (20) ein Brillenglas umfasst, und der Umfangsrand (B) der gekrümmten Fläche (S) des Substrats in Abhängigkeit von einer Aufnahme einer Brillenfassung, in die das Glas eingesetzt werden soll, bestimmt wird.

6. Verfahren nach Anspruch 5, bei dem das Plättchen (1) auf die Fläche (S) des Brillenglases, das das Substrat (20) bildet, aufgebracht wird, nachdem das Glas gemäß dem Umfangsrand (B) geschliffen wurde.

7. Verfahren nach Anspruch 5 oder 6, bei dem das Plättchen (1) in Schritt /7/ entlang einer Schnittkontur (D), die aus der Interpolationskontur (C) erhalten wird, ausgeschnitten wird, wobei jedes auf die Folie (10) aufgetragene gerade Segment ($\Sigma_1$, $\Sigma_2$, $\Sigma_2$, ...) an dem Ende des geraden Segments, das dem aufgetragenen Referenzpunkt (0) gegenüberliegt, um eine Rückzugslänge ($I_R$) verringert wird, die gleich ist:

- einer Abfasungshöhe (b), die durch eine Art des Einsetzens des Glases in die Fassung bestimmt wird, wobei die Abfasungshöhe eventuell selbst um eine Schnitthöhe, die auf Basis einer Dicke (e) des Glases bestimmt wird, verringert ist, oder
- einer Dicke einer Naht, die dazu bestimmt ist, um das Plättchen (1) entlang des Schnittrandes (D) aufgebracht zu werden, oder
- einer Korrektur entsprechend einer Verformung, die das Plättchen (1) beim Aufbringen des Plättchens auf die gekrümmte Fläche (S) des Glases erlitten hat, oder
- einer Summe von mindestens zwei der vorhergehenden Höhe/Dicke/Korrektur.

8. Verfahren nach einem der Ansprüche 5 bis 7, bei dem die Reihe von Probenahmepunkten ($B_1$, $B_2$, $B_3$, ...), die in Schritt /2/ bestimmt wurde, mindestens 300 Punkte, vorzugsweise mindestens 700 Punkte umfasst.

9. Verfahren nach einem der Ansprüche 5 bis 8, bei dem die Reihe von Probenahmepunkten ($B_1$, $B_2$, $B_3$, ...) des Umfangsrandes (B) der Fläche (S) des Substrats im Winkel entlang des Umfangsrandes in Bezug zum Referenzpunkt (0) gleich beabstandet sind.

10. Verfahren nach einem der Ansprüche 5 bis 9, bei dem die Fläche (S) des Brillenglases, die das Substrat (20) bildet, kugel- oder ringförmig ist, und bei dem die Koordinaten der Punkte des Netzes der Fläche in Schritt /1/ aus zwei Krümmungswerten der Fläche entlang von zwei senkrechten Richtungen berechnet werden.

11. Verfahren nach einem der Ansprüche 5 bis 9, bei dem die Koordinaten der Punkte des Netzes der Fläche (S) des Glases, die in Schritt /1/ erhalten wurden, in einer digitalen Datei abgelesen werden, wobei die Datei in einer Bibliothek aus Daten einer dem Glas entsprechenden Brillenverschreibung ausgewählt wird.

12. Verfahren nach einem der Ansprüche 5 bis 9, bei dem die Koordinaten der Punkte des Netzes der Fläche (S) des Glases, die in Schritt /1/ erhalten wurden, durch mindestens eine optische oder geometrische Messung, die am Glas durchgeführt wird, erhalten werden.

13. Verfahren nach Anspruch 11 oder 12, bei dem die Fläche (S) des Brillenglases, die das Substrat (20) bildet, progressiv ist.

14. Verfahren nach einem der Ansprüche 5 bis 13, bei dem die flache Folie (10), aus der das Plättchen (1) ausgeschnitten wird, unter folgenden Folien ausgewählt ist:

- einer organischen Folie, die mindestens einen funktionellen Überzug auf einer Seite der Folie trägt, beispielsweise einen Entspiegelungsüberzug;
- einer Folie, die mit einer Fresnel-Struktur versehen ist, so dass die Folie eine optische Leistung besitzt; oder
- einer mehrschichtigen Struktur, umfassend eine Gesamtheit von nebeneinander parallel zu einer Fläche der Struktur angeordneten Zellen.

15. Verfahren nach einem der vorhergehenden Ansprüche, bei dem der Umfangsrand der gekrümmten Fläche (S) des Substrats (20) einen äußeren Umfangsrand (B) der Fläche und mindestens ein Loch umfasst, das in der Fläche innerhalb des äußeren Umfangsrandes angeordnet ist.

**Claims**

1. Method for cutting a patch (1) from a planar film (10), said patch being intended to be applied to a curved face (S) of a substrate (20), which face is bounded by a peripheral edge (B), the method comprising a step consisting in transferring an outline to the film and cutting the patch depending on said outline, **characterized in that** it comprises the following steps:

/1/ obtaining the three-dimensional coordinates of a set of points forming a mesh of the face (S) of the substrate;
/2/ defining a reference point (0) on the face (S) of the substrate, a reference axis ($\Delta_0$) passing through the face (S) of the substrate at said reference point (0), a reference plane ($\Pi_0$) tangent to the face (S) of the substrate at said reference point (0), and a series of sampling points ($B_1$, $B_2$, $B_3$,...) along the peripheral edge (B) of said face of the substrate;

the following steps /3/ to /5/ being carried out for each sampling point ($B_1$, $B_2$, $B_3$,...) on the peripheral edge:

/3/ defining a development plane ($\Pi_1$, $\Pi_2$, $\Pi_3$,...) containing the reference axis ($\Delta_0$) and passing through said sampling point ($B_1$, $B_2$, $B_3$,...) on the peripheral edge;
/4/ from the coordinates obtained in step /1/ of the points of the mesh, calculating a curvilinear length ($l_1$, 12, $l_3$,...), between the reference point (0) and said sampling point ($B_1$, $B_2$, $B_3$,...) on the peripheral edge, by following a curved segment ($S_1$, $S_2$, $S_3$,...) of intersection of the face of the substrate (S) with the development plane ($\Pi_1$, $\Pi_2$, $\Pi_3$,...) ;
/5/ transferring the curvilinear length ($l_1$, $l_2$, $l_3$,...) from the reference point (0), along a rectilinear line ($\Delta_1$, $\Delta_2$. $\Delta_3$,...) of intersection between the development plane ($\Pi_1$, $\Pi_2$, $\Pi_3$,...) and the reference plane ($\Pi_0$) so as to form a rectilinear segment ($\Sigma_1$, $\Sigma_2$, $\Sigma_3$,...) originating from said reference point and having the length calculated in step /4/;

the method then comprising the following steps:

/6/ connecting those ends ($C_1$, $C_2$, $C_3$...) of the rectilinear segments ($\Sigma_1$, $\Sigma_2$, $\Sigma_3$,...) which are opposite the reference point (0) with an interpolation outline (C) contained in the reference plane ($\Pi_0$) ; and
/7/ transferring the interpolation outline (C) to the film (10) and cutting the patch (1) depending on said interpolation outline.

2. Method according to Claim 1, in which the face (S) of the substrate is a continuous non-developable surface.

3. Method according to Claim 1 or 2, furthermore comprising the following step, carried out after step /7/:

/8/ applying the patch (1) to the curved face (S) of the substrate by deforming said patch conformingly to said face, so that each rectilinear segment ($\Sigma_1$, $\Sigma_2$, $\Sigma_3$,...) transferred to the film is directed angularly towards the corresponding sampling point ($B_1$, $B_2$, $B_3$,...) on the edge (B) of the face (S) of the substrate,

the patch (1) being applied to the face (S) of the substrate from a point of initial contact (I) so that said patch does not slip relative to the substrate (20) at said point of initial contact, said point of initial contact (I) being distant from the reference point (0) transferred to the film (10) by less than a quarter of a diameter (d) of the smallest circle able to encircle the peripheral edge (B) in its entirety.

4. Method according to Claim 3, in which the initial point of contact (I) is distant from the reference point (0) transferred to the film (10) by less than a tenth of the diameter (d) of the smallest circle able to encircle the peripheral edge (B) in its entirety.

5. Method according to any one of the preceding claims, in which the substrate (20) comprises an ophthalmic spectacle lens, and the peripheral edge (B) of the curved face (S) of said substrate is defined depending on a spectacle frame housing, into which said lens is intended to be fitted.

6. Method according to Claim 5, in which the patch (1) is applied to the face (S) of the ophthalmic spectacle lens forming the substrate (20) after said lens has been trimmed conformingly to the peripheral edge (B).

7. Method according to Claim 5 or 6, in which the patch (1) is cut in step /7/ along a cutting outline (D) obtained from the interpolation outline (C) by decreasing each rectilinear segment ($\Sigma_1$, $\Sigma_2$, $\Sigma_3$,...) transferred to the film (10), at that end of said rectilinear segment which is opposite the transferred reference point (0), by a shrinkage length ($l_R$) equal to:

   - a bevel height (b) defined by a procedure used to fit the lens into the frame, said bevel height optionally itself being decreased by a heeling height that is dependent on a thickness (e) of the lens; or
   - a thickness of a strip intended to be placed around the patch (1), along said cutting edge (D); or
   - a correction corresponding to a deformation undergone by the patch (1) during the application of said patch to the curved face (S) of the lens; or
   - a sum of at least two of the above height/thickness/correction.

8. Method according to any one of Claims 5 to 7, in which the series of sampling points ($B_1$, $B_2$, $B_3$,...) defined in step /2/ comprises at least 300 points and preferably at least 700 points.

9. Method according to any one of Claims 5 to 8, in which the sampling points ($B_1$, $B_2$, $B_3$,...) on the peripheral edge (B) of the face (S) of the substrate are angularly equidistant along said peripheral edge relative to the reference point (0).

10. Method according to any one of Claims 5 to 9, in which the face (S) of the ophthalmic spectacle lens forming the substrate (S) is spheric or toric, and in which the coordinates of the points of the mesh of said face are calculated in step /1/ from two curvature values of said face along two perpendicular directions.

11. Method according to any one of Claims 5 to 9, in which the coordinates obtained in step /1/ of the points of the mesh of the face (S) of the lens are read from a digital file, said file being selected from a library on the basis of parameters of an ophthalmic prescription corresponding to the said lens.

12. Method according to any one of Claims 5 to 9, in which the coordinates obtained in step /1/ of the points of the mesh of the face (S) of the lens are determined via at least one optical or geometric measurement carried out on said lens.

13. Method according to Claim 11 or 12, in which the face (S) of the ophthalmic spectacle lens forming the substrate (20) is progressive.

14. Method according to any one of Claims 5 to 13, in which the planar film (10) from which the patch (1) is cut is selected from the following films:

   - an organic film bearing at least one functional coating on one face of said film, an antireflection coating for example;
   - a film provided with a Fresnel structure so that said film possesses an optical power; or
   - a multilayer structure comprising an array of cells juxtaposed parallel to one face of said structure.

15. Method according to any one of the preceding claims, in which the peripheral edge of the curved face (S) of the substrate (20) comprises an external peripheral edge (B) of said face and at least one hole located in said face interiorly to said external peripheral edge.

FIG.1a.

FIG.1b.

FIG.1C.

FIG.2.

FIG.3.

FIG.4.

**EP 2 409 181 B1**

## RÉFÉRENCES CITÉES DANS LA DESCRIPTION

**Documents brevets cités dans la description**

- FR 2907922